# EUROPÄISCHE PATENTSCHRIFT

(11) **EP 3 304 700 B1**
(45) Veröffentlichungstag und Bekanntmachung des Hinweises auf die Patenterteilung: **10.06.2020**
(21) Anmeldenummer: 16715240.4
(22) Anmeldetag: 07.04.2016
(51) Int. Cl.: H02K 5/20, H02K 7/116, H02K 9/16, H02K 9/26

(54) **ANTRIEBSVORRICHTUNG**
DRIVE DEVICE
DISPOSITIV D'ENTRAÎNEMENT

(30) Priorität: 28.05.2015 DE 102015006687
(43) Veröffentlichungstag der Anmeldung: 11.04.2018
(73) Patentinhaber: SEW-EURODRIVE GmbH & Co. KG, 76646 Bruchsal (DE)
(72) Erfinder: BECKER, Waldemar, 76676 Graben-Neudorf (DE); HETTEL, Domenik, 76474 Au am Rhein (DE); RUNG, Thomas, 76835 Flemingen (DE); SCHILLINGER, Jens, 76437 Rastatt (DE)
(86) Internationale Anmeldenummer: PCT/EP2016/000571
(87) Internationale Veröffentlichungsnummer: WO 2016/188600

(56) Entgegenhaltungen:
- WO-A2-2011/154205
- DE-A1- 2 634 059
- US-A- 4 082 180
- US-A1- 2006 175 925
- US-A1- 2009 208 351

## Beschreibung

Die Erfindung betrifft eine Antriebsvorrichtung.

Aus der DE 26 34 059 A1 ist ein Elektromotor bekannt, der außerhalb des Motorgehäuses ein zusätzliches Gehäuse aufweist, innerhalb dessen ein Kühlluftstrom ausgebildet ist.

Aus der US 2009/208351 A1 ist ebenfalls ein solcher Motor bekannt.

Aus der WO 2011/154205 A2 ist auch ein solcher Motor mit Luft-Flüssigkeitskühlung bekannt.

Aus der US 4 082 180 A ist als nächstliegender Stand der Technik ein motorisierter Förderbandantrieb bekannt.

Aus der US 2006/175925 A1 ist eine Motoranordnung mit Kommutatoren bekannt.

Der Erfindung liegt daher die Aufgabe zugrunde, einen Getriebemotor für Maschinen der Nahrungsmittelindustrie weiterzubilden.

Erfindungsgemäß wird die Aufgabe bei der Antriebsvorrichtung nach den in Anspruch 1 angegebenen Merkmalen gelöst.

Wichtige Merkmale der Erfindung bei der Antriebsvorrichtung sind, dass sie einen Elektromotor und ein von dem Elektromotor angetriebenes Getriebe aufweist, wobei der Elektromotor ein Statorblechpaket mit Statorwicklungen aufweist, dass in einem Statorgehäuse aufgenommen ist,
**wobei** das Statorgehäuse von einem Gehäuse, insbesondere Rohrgehäuse und/oder topfförmigen Gehäuse, der Antriebsvorrichtung umgeben ist, insbesondere radial umgeben ist, wobei das Gehäuse vom Statorgehäuse beabstandet ist,
wobei das Getriebe ein erstes und ein zweites Gehäuseteil aufweist,
wobei ein Luftstrom, insbesondere zirkulierender Luftstrom, innerhalb des Gehäuses ausbildbar ist,
wobei das zweite Gehäuseteil zumindest eine taschenförmige Vertiefung an seiner Oberfläche aufweist, an welcher der Luftstrom oder zumindest ein Teil des Luftstroms vorbeiströmt,
insbesondere so, dass Schmutz, Staub und/oder vom Luftstrom oder Teil des Luftstroms in der taschenförmigen Vertiefung des zweiten Gehäuseteils ablagerbar ist,
wobei ein Verbindungselement, insbesondere Schraube, das erste Gehäuseteil mit dem zweiten Gehäuseteil verbindet und der zur Betätigung des Verbindungselements mit einem Werkzeug benötigte Raumbereich mittels der Vertiefung gebildet ist und/oder bereitgestellt wird,
insbesondere wobei das Werkzeug in oder um das Verbindungselement zumindest teilweise greift und von der Umgebung her betätigbar ist, so dass die taschenförmige Vertiefung zum vom Gehäuse umfassten Innenraumbereich hin offen ausgeführt ist.

Von Vorteil ist dabei, dass der Betätigungsbereich für die Schraubverbindung auch als Schmutzsammeltasche fungiert.

Bei einer vorteilhaften Ausgestaltung weist das Statorgehäuse axial, insbesondere also in Rotorwellenachsrichtung, durchgehende Ausnehmungen auf, insbesondere so, dass, insbesondere wobei die Ausnehmungen den Luftstrom in axialer Richtung durchführen und der Luftstrom im beabstandeten Bereich zwischen Statorgehäuseteil und Gehäuse in entgegengesetzter Richtung rückgeführt wird.

**Erfindungsgemäß** weist der Elektromotor ein Statorblechpaket mit Statorwicklungen auf, das in einem Statorgehäuse aufgenommen ist,
**wobei** das Statorgehäuse axial, insbesondere also in Rotorwellenachsrichtung, durchgehende Ausnehmungen aufweist,
wobei das Statorgehäuse von einem Gehäuse, insbesondere Rohrgehäuse und/oder topfförmige Gehäuse, der Antriebsvorrichtung umgeben ist, insbesondere radial umgeben ist, wobei das Gehäuse vom Statorgehäuse beabstandet ist,
insbesondere so, dass ein insbesondere zirkulierender Luftstrom innerhalb des Gehäuses ausbildbar ist, insbesondere wobei die Ausnehmungen den Luftstrom in axialer Richtung durchführen und der Luftstrom im beabstandeten Bereich zwischen Statorgehäuseteil und Gehäuse in entgegengesetzter Richtung rückgeführt wird.

Von Vorteil ist dabei, dass der Getriebemotor von einem Gehäuse umgeben ist und somit in einer Maschine der Nahrungsmittelindustrie einsetzbar ist. Dabei ist eine verbesserte Entwärmung durch den Luftstrom realisiert, der in berührungsloser Weise Wärme vom Statorgehäuse zum Gehäuse der Antriebsvorrichtung transportiert. Der Luftstrom nimmt die vom Motor erzeugte Wärme auf und gibt sie an der Innenseite des Gehäuses an dieses ab. Somit ist als Gehäuse ein schlechterer Wärmeleiter verwendbar als Statorgehäuse. Denn das umgebende Gehäuse hat eine größere Innenfläche als die Außenfläche des Statorgehäuses. Die Umlenkung des Luftstroms erfolgt im Bereich des Getriebes, wodurch Wärme nicht nur des Motors sondern auch des Getriebes an den Luftstrom übertragen wird. Somit ist eine effektive Entwärmung des Getriebemotors ermöglicht.

Der Luftstrom verteilt also die Wärme im vom Gehäuse umschlossenen Innenraum. Dabei ist aber Gehäuse und Statorgehäuse voneinander beabstandet. Es liegt also keine direkte Berührung zwischen den beiden Teilen vor. Sie sind somit aus verschiedenen Werkstoffen herstellbar, wobei das Gehäuse wegen der radial weiteren Ausdehnung, also der das Statorgehäuse beabstandet umgebenden Ausformung, eine größere Innenfläche aufweist als das Statorgehäuse eine Außenfläche aufweist. Durch die Beabstandung ist also sogar ein schlechterer Wärmeleiter, wie beispielsweise Stahl, als Gehäuse verwendbar. Die Verwendung von Aluminium für das Statorgehäuse ermöglicht die Ausführung desselben als Stranggussteil. Somit sind die Kanäle für den Luftstrom in einfacher Weise erzeugbar. Der das Gehäuse verschließende Deckel ist ebenfalls aus Stahl ausführbar. Alternativ ist er auch aus Kunststoff ausführbar, wobei dann die Entwärmung durch den Deckel hindurch weniger effektiv ist.

Bei einer vorteilhaften Ausgestaltung ist das Statorgehäuse ein Stranggussteil, insbesondere wobei die Ziehrichtung parallel zur axialen Richtung, insbesondere also parallel zur Rotorwellenachsrichtung, ist. Von Vorteil ist dabei, dass eine einfache Herstellung ermöglicht ist, wobei das Stranggussteil in Ziehrichtung Kanäle eingeformt bekommt. Somit ist eine effektive Entwärmung ermöglicht. Außerdem ist die Länge des Statorgehäuses je nach herzustellendem Motor wählbar. Das Statorblechpaket samt Statorwicklungen ist in einfacher Weise einschiebbar in das Statorgehäuse, welches hierzu eine mittig angeordnete große Ausnehmung aufweist.

Bei einer vorteilhaften Ausgestaltung weist das Getriebe ein erstes und ein zweites Gehäuseteil auf, die miteinander verbunden sind,
wobei das Statorgehäuse mit dem zweiten Gehäuseteil verbunden, insbesondere schraubverbunden, ist,
wobei das Gehäuse, insbesondere Rohrgehäuse und/oder topfförmige Gehäuse, der Antriebsvorrichtung mit dem zweiten Gehäuseteil verbunden, insbesondere schraubverbunden, ist. Von Vorteil ist dabei, dass der Motor vom Getriebe gehalten ist. Denn durch das Schraubverbinden des Statorgehäuses mit dem zweiten Gehäuseteil ist auch das im Statorgehäuse angeordnete Statorblechpaket und die zugehörigen Statorwicklungen gehalten. Zusätzlich ist das Statorgehäuse auf seiner vom Getriebe abgewandten Seite mit einem Lagerflansch verbindbar, der an seiner vom Statorgehäuse abgewandten Seite mit dem Gehäuse oder einem mit dem Gehäuse verbundenen Deckel verbindbar ist, so dass eine Abstützung des Statorgehäuses auf dessen vom Getriebe abgewandten Seite ausführbar ist.

Bei einer vorteilhaften Ausgestaltung strömt der Luftstrom aus den Ausnehmungen des Statorgehäuses jeweilige Ausnehmungen des zweiten Gehäuseteils durch,
insbesondere die durch am zweiten Gehäuseteil hervor ragende Rippen zumindest teilweise begrenzt sind. Von Vorteil ist dabei, dass der Luftstrom aus den im Statorgehäuseteil geführten Kanälen am zweiten Gehäuseteil vorbeiströmt und dann erst zum Gehäuse, insbesondere Rohrgehäuse, strömt. Somit ist eine effektive Entwärmung nicht nur des Motors sondern auch des Getriebes ermöglicht.

**Erfindungsgemäß** sind das Statorgehäuse aus einem zweiten Werkstoff und das Gehäuse aus einem ersten Werkstoff gefertigt,
wobei der erste Werkstoff eine höhere Wärmeleitfähigkeit aufweist als der zweite Werkstoff. Von Vorteil ist dabei, dass trotz der schlechten Wärmeleitfähigkeit des Gehäuses eine effektive Entwärmung realisierbar ist. Hierzu wird mit dem Luftstrom ein Aufspreizen des Wärmestroms erreicht und der Wärmestrom über das umgebende und somit eine große Oberfläche aufweisende Gehäuse an die Umgebung abgeführt.

Bei einer vorteilhaften Ausgestaltung weist das Statorgehäuse an der dem Gehäuse zugewandten Oberfläche, insbesondere an seiner Außenfläche, eine Beschichtung auf zur Erhöhung der abgestrahlten Wärmeleistung. Von Vorteil ist dabei, dass ein verringerter Wärmeübergangswiderstand vom Statorgehäuse bis zur Umgebung erreichbar ist.

Bei einer vorteilhaften Ausgestaltung weist das Gehäuse an der dem Statorgehäuse zugewandten Oberfläche, insbesondere an seiner Innenfläche, eine Beschichtung auf zur Erhöhung der absorbierten Wärmeleistung. Von Vorteil ist dabei, dass wiederum ein verringerter Wärmeübergangswiderstand vom Statorgehäuse bis zur Umgebung erreichbar ist.

Bei einer vorteilhaften Ausgestaltung ist der Luftstrom konvektiv, insbesondere nur konvektiv, angetrieben. Von Vorteil ist dabei, dass ein aktives Antreiben nicht notwendig ist.

Bei einer vorteilhaften Ausgestaltung ist zumindest ein Lüfter oder sind zwei Lüfter zum Antreiben des Luftstroms an einem Lagerflansch des Motors angeordnet. Von Vorteil ist dabei, dass ein aktives Antreiben ermöglicht ist und somit ein effektives Entwärmen ausführbar ist.

**Erfindungsgemäß** weist der Lagerflansch einen insbesondere kreisförmigen Grundplattenabschnitt auf und einen daran angeordneten Trennwandabschnitt,
wobei der Trennwandabschnitt zur Trennung des Luftstroms von einem Raumbereich vorgesehen ist, der den B-seitigen, insbesondere den vom Getriebe abgewandten, axialen Endbereich der Rotorwelle umgibt oder einen an diesem Endbereich angeordneten Winkelsensor zumindest teilweise umgibt. Von Vorteil ist dabei, dass der Raumbereich des Sensors staubfrei und getrennt gehalten ist von dem Luftstrom. Somit ist ein fehlerfreies Arbeiten des Sensors gewährleistbar. Außerdem wird die Entwärmung mittels des Luftstroms ausgeführt und somit der Sensor thermisch geringer belastet, insbesondere mit geringeren Temperaturhüben beim Einschalten oder Ausschalten des Motors oder auch während des Betriebs.

Bei einer vorteilhaften Ausgestaltung ist im Lagerflansch ein Lager einer Rotorwelle des Motors aufgenommen. Von Vorteil ist dabei, dass der Lagerflansch nicht nur zur Aufnahme eines Lagers, sondern auch zur Trennung des Luftstroms vom Raumbereich des Sensors eingesetzt wird. Außerdem sind am Lagerflansch noch Lüfter befestigbar, welche den Luftstrom aktiv antreibbar machen.

**Erfindungsgemäß** ist der Trennwandabschnitt in einer ersten Umfangswinkelrichtung radial weniger ausgedehnt als in einer von der ersten unterschiedlichen zweiten Umfangswinkelrichtung. Von Vorteil ist dabei, dass an der Schmalseite ein oder mehrere Lüfter anordenbar sind. Somit ist die aktive Förderung des Luftstroms in kompakter Weise ausführbar.

Bei einer vorteilhaften Ausgestaltung ist der Lüfter radial außerhalb des Trennwandabschnitts angeordnet, wobei der Lüfter von der zweiten Umfangswinkelrichtung in Umfangsrichtung beabstandet ist,
insbesondere wobei der vom Lüfter überdeckte Umfangswinkelbereich den ersten Umfangswinkel umfasst. Von Vorteil ist dabei, dass die beiden Lüfter voneinander beabstandet sind, insbesondere diametral gegenüberstehend anordenbar sind, so dass eine möglichst symmetrische Luftströmung im Motor erreichbar ist.

Bei einer vorteilhaften Ausgestaltung ist der Trennwandabschnitt an der vom Getriebe abgewandten axialen Seite des Grundplattenabschnitts angeordnet. Von Vorteil ist dabei, dass die Umlenkung des Luftstroms im Bereich des Lagerflansches ausgeführt wird und zwar auf der vom Statorgehäuse abgewandten Seite. Somit umströmt der Luftstrom den Lagerflansch und entwärmt diesen ebenfalls. Die vom im Lagerflansch aufgenommenen Lager erzeugte Wärme wird auf diese Weise effektiv abtransportiert.

Bei einer vorteilhaften Ausgestaltung ist am Trennwandabschnitt ein Vorsprung zur axialen Begrenzung des Lüfters angeformt. Von Vorteil ist dabei, dass der Lüfter in einfacher Weise exakt positionierbar ist.

Bei einer vorteilhaften Ausgestaltung weist der Grundplattenabschnitt zumindest eine, insbesondere zwei, Ausnehmungen auf zur Kabeldurchführung.

das Statorgehäuse an der dem Gehäuse zugewandten Oberfläche, insbesondere an seiner Außenfläche, eine Beschichtung aufweist zur Erhöhung der abgestrahlten Wärmestrahlung, der Grundplattenabschnitt eine mittig angeordnete Ausnehmung zur Aufnahme eines Stators eines Winkelsensors. Von Vorteil ist dabei, dass elektrische Leitungen als Kabel vom Statorraumbereich, insbesondere von den Statorwicklungen zum Sensor in einfacher Weise durchführbar sind. Somit sind die Leitungen durchführbar, wobei der Luftstrom abgetrennt ist von der Kabeldurchführung.

Bei einer vorteilhaften Ausgestaltung weist das zweite Gehäuseteil taschenförmige Vertiefungen an seine Oberfläche auf, an welchen der Luftstrom vorbeiströmt,
insbesondere so, dass Schmutz, Staub und/oder vom Luftstrom in den taschenförmigen Vertiefungen, insbesondere Luftkammern, des zweiten Gehäuseteils ablagerbar ist,
wobei ein Verbindungselement, insbesondere Schraube, das erste Gehäuseteil mit dem zweiten Gehäuseteil verbindet und der zur Betätigung des Verbindungelements mit einem Werkzeug benötigte Raumbereich mittels der Vertiefung bereitgestellt wird. Von Vorteil ist dabei, dass die taschenförmigen Vertiefungen nicht nur als Staub- oder Schmutzfänger ausgeführt sind, sondern auch einen freien Betätigungsraumbereich bieten für die Betätigung der Schraubverbindung zwischen Gehäuseteilen des Getriebes, insbesondere zwischen erstem und zweitem Gehäuseteil des Getriebes.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist eine erfindungsgemäße angeschnitten dargestellte Antriebsvorrichtung in Schrägansicht gezeigt.

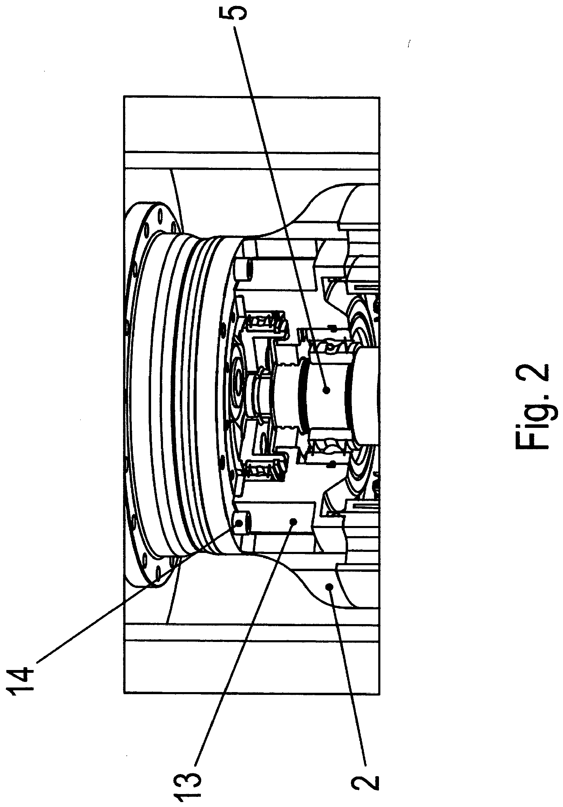

In der Figur 2 ist ein zugehöriger Ausschnitt in Schrägansicht aus einer anderen Blickrichtung dargestellt.

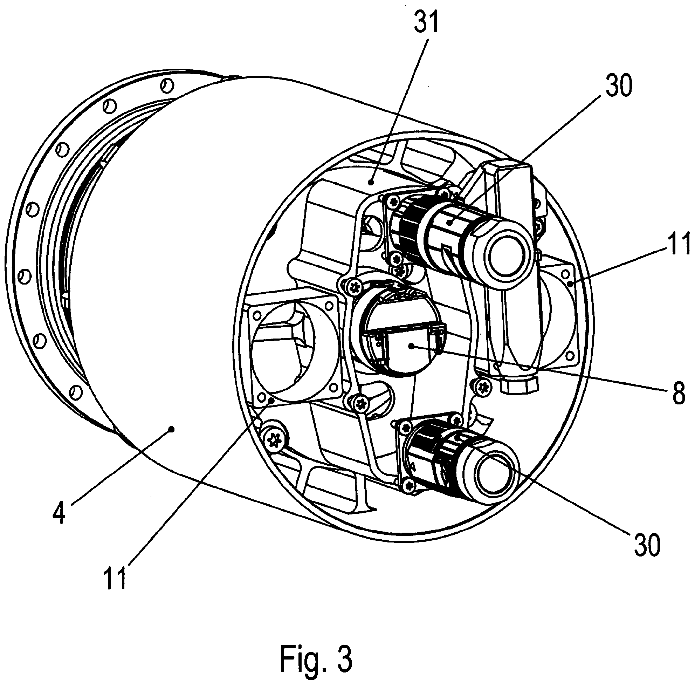

In der Figur 3 ist eine Schrägansicht auf das B-seitige Ende der Antriebsvorrichtung dargestellt.
In der Figur 4 ist eine Schrägansicht auf den B-seitigen Lagerflansch dargestellt.
In der Figur 5 ist ein zugehöriger Querschnitt dargestellt.

Wie in den Figuren gezeigt, weist die Antriebsvorrichtung ein von einem Elektromotor angetriebenes Getriebe auf.

Das Gehäuse des Getriebes ist aus einem ersten und einem zweiten Gehäuseteil (1, 2) zusammengesetzt. Diese Gehäuseteile (1, 2) sind miteinander schraubverbunden mittels einer Schraubverbindung (14).

Das erste Gehäuseteil 1 umfasst eine Getriebestufe, die einer eintreibenden Stufe, welche vom zweiten Gehäuseteil 2 umfasst ist, nachgeordnet ist.

Das zweite Gehäuseteil 2 nimmt nicht nur ein Lager der eintreibenden Welle auf, sondern auch ein Hohlrad der als Planetengetriebestufe ausgeführten eintreibenden Getriebestufe.

Das Hohlrad ist hierbei aus einem ersten Werkstoff, wie Stahl, und das zweite Gehäuseteil 2 aus einem anderen Werkstoff, wie Aluminium. Somit ist der aufnehmende und somit die Wärme aufspreizende Werkstoff besser wärmeleitend als der Werkstoff des Hohlrades. Das zweite Gehäuseteil 2 nimmt also Wärme vom Hohlrad und Wärme des eintreibenden Lagers auf.

Die eintreibende Welle ist drehfest mit einem Sonnenrad verbunden, das mit Planetenrädern im Eingriff ist, welche an einem Planetenträger drehbar gelagert sind, der mit dem eintreibenden Verzahnungsteil der nachgeordneten Stufe drehfest verbunden ist. die Planetenräder sind mit der Innenverzahnung des Hohlrades.

Die eintreibende Welle ist drehfest mit dem Rotor 5 des Elektromotors verbunden oder einteilig mit diesem ausgeführt, also selbst als Rotorwelle ausgeführt.

Der Elektromotor ist als Synchronmotor ausgeführt, wobei der Rotor 5 Permanentmagnete aufweist.

Der den Rotor umgebende Stator 6 weist ein Statorblechpaket auf, das aus bewickelten Einzelzähnen zusammengesetzt ist.

Das Statorblechpaket ist in einem Statorgehäuse 3 aufgenommen, das vorzugsweise als Stranggussteil gefertigt ist und dabei in axialer Richtung sich erstreckende, also in Richtung der Rotorwellenachse sich erstreckende, Ausnehmungen aufweist, die als Kanäle für einen Luftstrom wirksam sind.

Das Statorblechpaket ist dabei kraftschlüssig, insbesondere thermisch geschrumpft, verbunden mit dem Statorgehäuse 3. Zur Herstellung der Verbindung weisen Statorblechpaket und Statorgehäuse 3 vor dem ineinander Fügen zueinander unterschiedliche Temperaturen auf. Nach Anpassung der Temperaturen sind das Statorblechpaket, das vorzugsweise aus Stahlblechteilen zusammengesetzt ist, und das Statorgehäuse, das vorzugsweise aus Aluminium gefertigt ist, kraftschlüssig verbunden.

Am B-seitigen Endbereich der Rotorwelle 5 ist eine Bremse 7 und ein Winkelsensor 8 angeordnet, wobei der Rotor des Winkelsensors 8 drehfest mit der Rotorwelle 5 verbunden ist und der Stator des Winkelsensors 8 drehfest in einem Lagerflansch 31 aufgenommen ist, der drehfest mit dem Statorgehäuse 3 verbunden ist, insbesondere schraubverbunden.

Mit dem Gehäuse des Getriebes, insbesondere mit dem ersten Gehäuseteil 1, ist ein Gehäuse 4, insbesondere Rohrgehäuse, schraubverbunden, welches den das Getriebe antreibenden Elektromotor umgibt.

Auf der vom Getriebe abgewandten Seite ist das Gehäuse 4, insbesondere Rohrgehäuse, verschlossen von einem Deckel 10. Somit ist der Elektromotor von einem geschlossenen Raumbereich umgeben.

Der Lagerflansch weist zwei axial durchgehende Ausnehmungen auf, in welchen Lüfter 11 anordenbar sind, die einen Luftstrom durch die Kanäle des Stranggussteils, also Statorgehäuses 3 fördern, der durch Ausnehmungen im zweiten Gehäuseteil 2 zum Raumbereich zwischen Statorgehäuse 3 und Gehäuse 4, insbesondere Rohrgehäuse, geleitet wird und von dort wiederum durch die Lüfter 11 zu den Kanälen im Stranggussteil, also Statorgehäuse 3.

(Die Lüfterflügel des Lüfters 11 sind nicht näher dargestellt, weil der Lüfter 11 nur schematisch skizziert ist.)

Aber auch ohne die aktive Förderwirkung der Lüfter 11, die jeweils einen antreibenden Lüftermotor 30 aufweisen, ist der Luftstrom gefördert. Denn die vom Motor erzeugte Wärme wird vom Statorgehäuse 3 an den Luftstrom abgegeben, dieser also aufgewärmt. Bei der in den Figuren dargestellten Montagerichtung, also bei einem Getriebe, das höher angeordnet ist als der B-seitige Endbereich der Rotorwelle 5 und/oder der Bremse 7 und/oder des Winkelsensors 8, fließt der aufgewärmte Luftstrom 12 nach oben, so dass der im Zwischenbereich sich befindenden Luftanteil seine Wärme am Gehäuse 4 abgibt und daher nach unten sinkt. Der Luftstrom 12 sinkt also in einem ersten Radialabstandsbereich nach unten und steigt in einem zweiten Radialabstandsbereich nach oben, wobei der erste Bereich radial weiter außen als der zweite Bereich ist, also die Radialabstandswerte des ersten Bereichs größer sind als diejenigen des zweiten Bereichs. Durch diese konvektive Strömung ist also eine verbesserte Entwärmung in einfacher Weise erreichbar.

Die im zweiten Gehäuseteil 2 ausgeformten Ausnehmungen sind zumindest teilweise von radial am Gehäuseteil 2 hervorragenden Rippen 15 berandet. Somit ist auch Wärme vom Hohlrad der eintreibenden Stufe und Wärme vom in dem zweiten Gehäuseteil 2 aufgenommenen Lager der eintreibenden Welle über die Rippen 15 an den Luftstrom abgebbar.

Zusätzlich ist die radiale Außenseite des Statorblechpakets geschwärzt ausgeführt, also beispielsweise mit einer dunklen oder schwarzen Farbe lackiert oder beschichtet.

Ebenso ist die radiale Innenwandung des Gehäuses 4 geschwärzt ausgeführt, also beispielsweise mit einer dunklen oder schwarzen Farbe lackiert oder beschichtet.

Auf diese Weise ist zusätzlich ein Strahlungstransport für einen Teil des Wärmestroms vom Motor zur Umgebung hin ermöglicht.

Der Lagerflansch 31 weist einen Grundplattenabschnitt 42 auf, auf dem ein Trennwandabschnitt 43, insbesondere einen ovalförmigen Trennwandabschnitt 43, ausgeformt ist.

Dieser Trennwandabschnitt 43 trennt den Raumbereich des Luftstromes 12 ab vom den Winkel umgebenden Raumbereich. Der B-seitig, also auf der vom Getriebe abgewandten axialen Seite des Grundplattenabschnitts 42, aus dem Grundplattenabschnitt 42 hervorragende Teil des Winkelsensors 8 überdeckt also einen axialen Bereich, der von dem vom Trennwandabschnitt 43 überdeckten axialen Bereich umfasst ist.

Der Grundplattenabschnitt 42 weist zwei axial durchgehende Ausnehmung 41 auf, die zur Durchführung von Kabeln vom Raumbereich der Bremse 7 und des Motors zum von dem Trennwandabschnitt 43 zumindest teilweise, insbesondere nämlich in radialer Richtung, umgebenen Raumbereich geeignet ist.

Eine mittig angeordnete Aufnahme 40 für den Winkelsensor 8 ist ebenfalls im Grundplattenabschnitt 42 vorhanden.

Der Trennwandabschnitt 43 weist in verschiedenen Umfangsrichtungen verschiedene Radialabstände auf und ist somit in Umfangsrichtung asymmetrisch, also nicht drehsymmetrisch. Der Verlauf des Radialabstands vom Umfangswinkel ist oval oder ovalähnlich. Die Schmalseite ermöglicht ein Anordnen der Lüfter 11 neben dem Trennwandabschnitt 43, wobei die Lüfter 11 in axialer Richtung an einem jeweiligen Vorsprung 44 anliegen, so dass deren axiale Position in einfacher Weise festlegbar ist.

Im Grundplattenabschnitt 42 sind auch noch axial durchgehende Ausnehmungen zum Durchlass des Luftstroms 12 vorsehbar, der durch die Lüfter 11 förderbar ist.

Der Grundplattenabschnitt 42 weist einen kreisförmigen radialen Außenrand auf.

Der Deckel 10 verschließt den Trennwandabschnitt 43, so dass das den Winkelsensor aufnehmende Raumbereich getrennt ist von dem Luftstrom 12.

Der Luftstrom 12 wir begrenzt vom Deckel 10, dem Gehäuse 4 und dem Statorgehäuse 3 sowie dem zweiten Gehäuse 2.

Das Statorgehäuse 3 weist einen lichten Abstand 9 zum Gehäuse 4 auf, der im Wesentlichen der radialen Ausdehnung eines jeweiligen, im Statorgehäuse 3 ausgeformten Kanals entspricht.

Die Umfangswinkelposition der Rippen 15 des zweiten Gehäuseteils 2 sind derart gewählt, dass an derselben Umfangswinkelposition eine jeweilige, sich radial erstreckende Trennwand angeordnet ist. Somit tritt der Luftstrom 12 aus dem jeweiligen im Strangguss angeordneten Kanal in eine jeweilige Ausnehmung des zweiten Gehäuseteils 2, die zumindest teilweise begrenzt ist von Rippen 15. Der Luftstrom 12 tritt danach aus der Ausnehmung des zweiten Gehäuseteils 2 aus in einen Raumbereich, der den Zwischenraumbereich zwischen Statorgehäuseteil und Gehäuse 4 enthält.

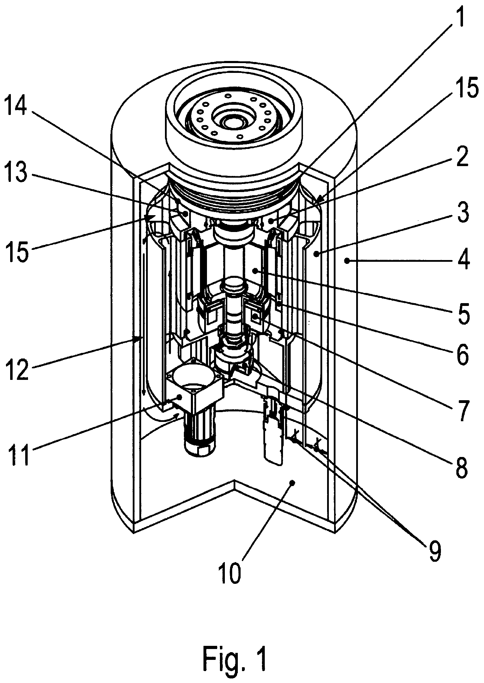

Wie in Figur 1 gezeigt, ist das Gehäuse 4 topfförmig ausgeformt, wobei in einer Ausnehmung des Topfbodens das erste Gehäuseteil 1 des Getriebes zumindest teilweise eingesteckt und verbunden ist. Die abtreibende Welle des Getriebes führt somit durch diese Ausnehmung des Topfbodens hindurch.

Der Luftstrom 12 streicht beim durchströmen der Ausnehmungen im zweiten Gehäuseteil 2 an taschenförmigen Vertiefungen 13 des zweiten Gehäuseteils 2 vorbei, wodurch sich auch ein Wirbel in dem Bereich der jeweiligen Vertiefung 13 ausbildet, so dass an der Vertiefung 13 Staub und/oder Schmutz abgelagert wird.

Darüber hinaus sind die Vertiefungen nicht nur Schmutzsammeltaschen, sondern bieten einen verbesserten und/oder erweiterten Betätigungsbereich zur Betätigung von Schrauben 14, welche die Verbindung des ersten mit dem zweiten Gehäuseteil (1, 2) ermöglichen. Dabei sind die Schrauben 14 axial gerichtet und jeweils durch eine jeweilige, axial durchgehende Ausnehmung, insbesondere Bohrung, geführt und in eine Gewindebohrung des ersten Gehäuseteils 1 eingeschraubt. Alternativ ist die Schraube auch durch die im ersten und zweiten Gehäuseteil (1, 2) durchgehende Ausnehmung geführt. Die Vertiefung 13 ist nach radial innen begrenzt durch das zweite Gehäuseteil 2, nach radial außen aber offen.

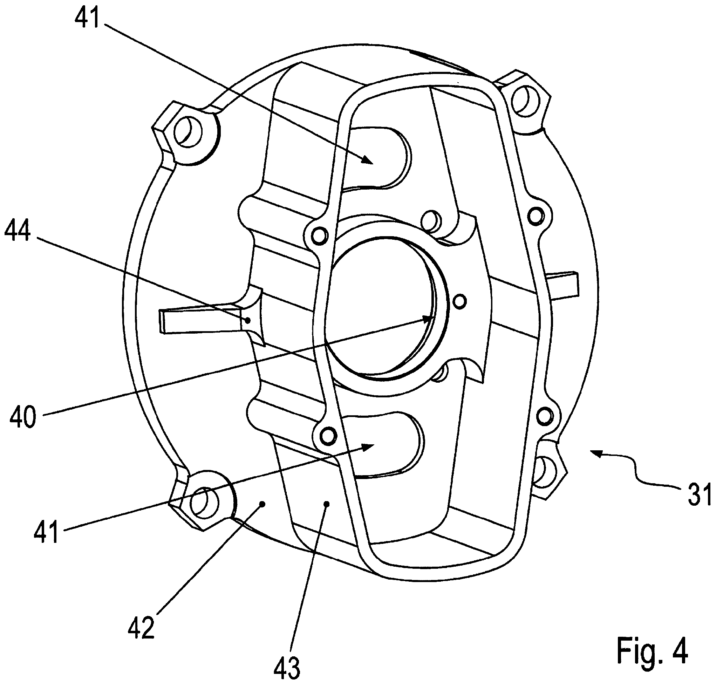

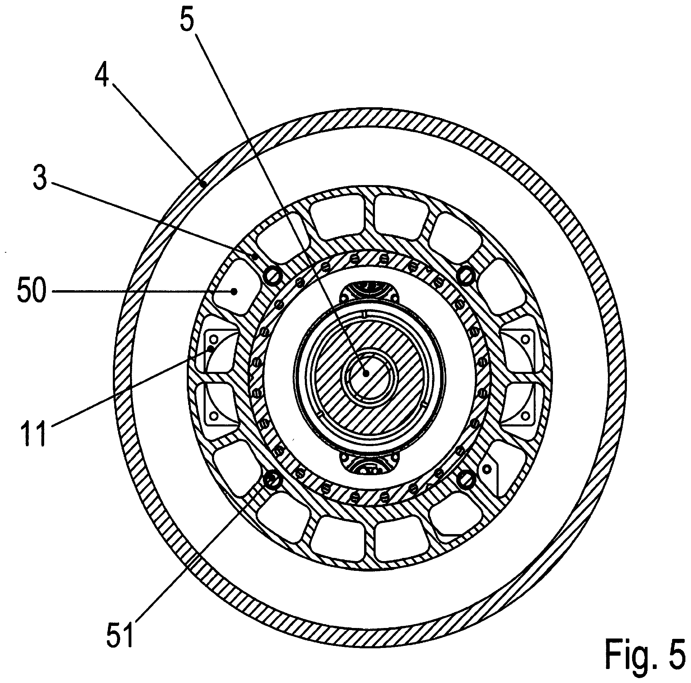

Wie in den Figuren 4 und 5 gezeigt, weist das Statorgehäuse 3 axial, insbesondere also in Rotorwellenachsrichtung, durchgehende Ausnehmungen auf, wobei die Ausnehmungen den Luftstrom in axialer Richtung durchführen und der Luftstrom im beabstandeten Bereich zwischen Statorgehäuseteil und Gehäuse 4 in entgegengesetzter Richtung rückgeführt wird.

Unter dem Begriff "Schraube" wird in der vorliegenden Schrift auch ein anderes, eine Schraubverbindung bewirkendes Verbindungselement, wie ein Schraubteil oder ein Mittel zur Herstellung einer Schraubverbindung, subsummiert.

### Bezugszeichenliste

- 1: erstes Gehäuseteil des Getriebes
- 2: zweites Gehäuseteil des Getriebes, insbesondere Vorstufengehäuse
- 3: Statorgehäuse, insbesondere Stranggussteil
- 4: Gehäuse, insbesondere Rohrgehäuse
- 5: Rotor
- 6: Stator
- 7: Bremse
- 8: Geber
- 9: lichter Abstand
- 10: Deckel
- 11: Lüfter
- 12: Luftströmung
- 13: Tasche, insbesondere Vertiefung am zweiten Gehäuseteil
- 14: Schraubverbindung zwischen erstem und zweitem Gehäuseteil
- 15: Rippe
- 30: Lüftermotor
- 31: Lagerflansch, insbesondere B-seitiger Lagerflansch des Elektromotors
- 40: Geberaufnahme
- 41: Kabeldurchführung, insbesondere axial durchgehende Ausnehmung zur Kabeldurchführung
- 42: Grundplattenabschnitt
- 43: Trennwandabschnitt, insbesondere ovalförmiger Trennwandabschnitt
- 44: Vorsprung zur Begrenzung des Lüfters 11
- 50: Ausnehmung im Statorgehäuse 3
- 51: Bohrung für Schrauben

## Patentansprüche

1. Antriebsvorrichtung, aufweisend einen Elektromotor und ein von dem Elektromotor angetriebenes Getriebe,
wobei das Getriebe ein erstes und ein zweites Gehäuseteil (1, 2) aufweist,
wobei der Elektromotor ein Statorblechpaket mit Statorwicklungen aufweist, dass in einem Statorgehäuse (3) aufgenommen ist,
**wobei** das Statorgehäuse (3) sowie das erste und das zweite Gehäuseteil (1, 2) von einem Gehäuse (4), insbesondere Rohrgehäuse und/oder topfförmigen Gehäuse, der Antriebsvorrichtung umgeben ist, insbesondere radial umgeben ist, wobei das Gehäuse (4) vom Statorgehäuse (3) beabstandet ist,
wobei ein zirkulierender Luftstrom, innerhalb des Gehäuses (4) ausbildbar ist,
wobei das zweite Gehäuseteil (2) zumindest eine taschenförmige Vertiefung an seiner Oberfläche aufweist, an welcher der Luftstrom oder zumindest ein Teil des Luftstroms vorbeiströmt,
so, dass Schmutz und/oder Staub vom Luftstrom oder einem Teil des Luftstroms in der taschenförmigen Vertiefung des zweiten Gehäuseteils (2) ablagerbar ist,
wobei ein Verbindungselement, insbesondere eine Schraube, das erste Gehäuseteil (1) mit dem zweiten Gehäuseteil (2) verbindet und der zur Betätigung des Verbindungselements mit einem Werkzeug benötigte Raumbereich mittels der Vertiefung gebildet ist und/oder bereitgestellt wird,
insbesondere wobei das Werkzeug in oder um das Verbindungselement zumindest teilweise greift und von der Umgebung her betätigbar ist, so dass die taschenförmige Vertiefung zum vom Gehäuse (4) umfassten Innenraumbereich hin offen ausgeführt ist,
wobei das Statorgehäuse (3) axial, also in Rotorwellenachsrichtung, durchgehende Ausnehmungen aufweist, wobei die Ausnehmungen den Luftstrom in axialer Richtung durchführen und der Luftstrom im beabstandeten Bereich zwischen Statorgehäuseteil und Gehäuse (4) in entgegengesetzter Richtung rückgeführt wird,
**dadurch gekennzeichnet, dass**
der Luftstrom aus den Ausnehmungen des Statorgehäuses (3) jeweilige Ausnehmungen des zweiten Gehäuseteils (2) durchströmt,
die durch am zweiten Gehäuseteil (2) hervor ragende Rippen (15) zumindest teilweise begrenzt sind,
wobei das Statorgehäuse (3) auf seiner vom Getriebe abgewandten Seite über einen Lagerflansch (31) mit dem Gehäuse (4) verbunden ist,
wobei der Lagerflansch (31) einen insbesondere kreisförmigen Grundplattenabschnitt (42) aufweist und einen daran angeordneten Trennwandabschnitt (43),
wobei der Trennwandabschnitt (43) zur Trennung des Luftstroms von einem Raumbereich vorgesehen ist, der den vom Getriebe abgewandten axialen Endbereich der Rotorwelle umgibt oder einen an diesem Endbereich angeordneten Winkelsensor zumindest teilweise umgibt,
wobei der Trennwandabschnitt (43) in einer ersten Umfangswinkelrichtung radial weniger ausgedehnt ist als in einer von der ersten unterschiedlichen zweiten Umfangswinkelrichtung,
wobei das Statorgehäuse (3) aus einem zweiten Werkstoff und das Gehäuse (4) aus einem ersten Werkstoff gefertigt sind,
wobei der erste Werkstoff eine höhere Wärmeleitfähigkeit aufweist als der zweite Werkstoff.

2. Antriebsvorrichtung nach Anspruch 1,
**dadurch gekennzeichnet, dass**
das Statorgehäuse (3) ein Stranggussteil ist, insbesondere wobei die Ziehrichtung parallel zur axialen Richtung, insbesondere also parallel zur Rotorwellenachsrichtung, ist.

3. Antriebsvorrichtung nach mindestens einem der vorangegangenen Ansprüche,
**dadurch gekennzeichnet, dass**
das Getriebe ein erstes und ein zweites Gehäuseteil (1, 2) aufweist, die miteinander verbunden sind,
wobei das Statorgehäuse (3) mit dem zweiten Gehäuseteil (2) verbunden, insbesondere schraubverbunden, ist,
wobei das Gehäuse (4), insbesondere Rohrgehäuse und/oder topfförmige Gehäuse, der Antriebsvorrichtung mit dem zweiten Gehäuseteil (2) verbunden, insbesondere schraubverbunden, ist.

4. Antriebsvorrichtung nach mindestens einem der vorangegangenen Ansprüche,
**dadurch gekennzeichnet, dass**
das Statorgehäuse (3) an der dem Gehäuse (4) zugewandten Oberfläche, insbesondere an seiner Außenfläche, eine Beschichtung aufweist zur Erhöhung der abgestrahlten Wärmeleistung.

5. Antriebsvorrichtung nach mindestens einem der vorangegangenen Ansprüche,
**dadurch gekennzeichnet, dass**
das Gehäuse (4) an der dem Statorgehäuse (3) zugewandten Oberfläche, insbesondere an seiner Innenfläche, eine Beschichtung aufweist zur Erhöhung der absorbierten Wärmeleistung.

6. Antriebsvorrichtung nach mindestens einem der vorangegangenen Ansprüche,
**dadurch gekennzeichnet, dass**
der Luftstrom konvektiv, insbesondere nur konvektiv, angetrieben ist.

7. Antriebsvorrichtung nach mindestens einem der vorangegangenen Ansprüche,
**dadurch gekennzeichnet, dass**
zumindest ein Lüfter (11) oder zwei Lüfter (11) zum Antreiben des Luftstroms an einem Lagerflansch (31) des Motors angeordnet ist oder sind.

8. Antriebsvorrichtung nach mindestens einem der vorangegangenen Ansprüche,
**dadurch gekennzeichnet, dass**
im Lagerflansch (31) ein Lager einer Rotorwelle des Motors aufgenommen ist.

9. Antriebsvorrichtung nach mindestens einem der vorangegangenen Ansprüche,
**dadurch gekennzeichnet, dass**
der Lüfter (11) radial außerhalb des Trennwandabschnitts (43) angeordnet ist, wobei der Lüfter (11) von der zweiten Umfangswinkelrichtung in Umfangsrichtung beabstandet ist,
insbesondere wobei der vom Lüfter (11) überdeckte Umfangswinkelbereich den ersten Umfangswinkel umfasst.

10. Antriebsvorrichtung nach mindestens einem der vorangegangenen Ansprüche,
**dadurch gekennzeichnet, dass**
der Trennwandabschnitt (43) an der vom Getriebe abgewandten axialen Seite des Grundplattenabschnitts (42) angeordnet ist.

11. Antriebsvorrichtung nach mindestens einem der vorangegangenen Ansprüche,
**dadurch gekennzeichnet, dass**
am Trennwandabschnitt (43) ein Vorsprung (44) zur axialen Begrenzung des Lüfters (11) angeformt ist.

12. Antriebsvorrichtung nach mindestens einem der vorangegangenen Ansprüche,
**dadurch gekennzeichnet, dass**
der Grundplattenabschnitt (42) zumindest eine, insbesondere zwei, Ausnehmungen aufweist zur Kabeldurchführung (41).

13. Antriebsvorrichtung nach mindestens einem der vorangegangenen Ansprüche,
**dadurch gekennzeichnet, dass**
das Statorgehäuse (3) an der dem Gehäuse (4) zugewandten Oberfläche, insbesondere an seiner Außenfläche, eine Beschichtung aufweist zur Erhöhung der abgestrahlten Wärmestrahlung.

14. Antriebsvorrichtung nach mindestens einem der vorangegangenen Ansprüche,
**dadurch gekennzeichnet, dass**
der Grundplattenabschnitt (42) eine mittig angeordnete Ausnehmung (50) zur Aufnahme eines Stators (6) eines Winkelsensors.

## Claims

1. A drive device, having an electric motor and a gear unit driven by the electric motor,
wherein the gear unit has a first and a second housing part (1, 2),
wherein the electric motor has a laminated stator core with stator windings which is received in a stator housing (3),
wherein the stator housing (3) and also the first and the second housing part (1, 2) is surrounded, in particular is radially surrounded, by a housing (4), in particular tubular housing and/or pot-shaped housing, of the drive device, wherein the housing (4) is spaced apart from the stator housing (3),
wherein a circulating air stream can be formed within the housing (4),
wherein the second housing part (2) has at least one pocket-shaped depression on its surface, past which the air stream or at least part of the air stream flows,
such that dirt and/or dust from the air stream or part of the air stream can be deposited in the pocket-shaped depression in the second housing part (2),
wherein a connecting element, in particular a screw, connects the first housing part (1) to the second housing part (2) and the spatial region required for actuating the connecting element with a tool is formed and/or is provided by means of the depression,
in particular wherein the tool engages at least partially into or around the connecting element and can be actuated from the surroundings, so that the pocket-shaped depression is formed open towards the inner spatial region encompassed by the housing (4),
wherein the stator housing (3) has cutouts which are continuous axially, i.e. in the axial direction of the rotor shaft, wherein the cutouts lead the air stream through in the axial direction and the air stream is returned in the opposite direction in the spaced-apart region between the stator housing part and housing (4),
**characterised in that**
the air stream from the cutouts in the stator housing (3) flows through respective cutouts in the second housing part (2),
which are limited at least partially by ribs (15) protruding out on the second housing part (2),
wherein the stator housing (3) on its side remote from the gear unit is connected to the housing (4) by way of a bearing flange (31),
wherein the bearing flange (31) has an in particular circular baseplate portion (42), and a partition portion (43) arranged thereon,
wherein the partition portion (43) is provided to separate the air stream from a spatial region which surrounds the axial end region of the rotor shaft which is remote from the gear unit, or at least partially surrounds an angular sensor arranged on this end region,
wherein the partition portion (43) in a first angle-at-circumference direction is radially less extended than in a second angle-at-circumference direction different from the first, wherein the stator housing (3) is manufactured from a second material and the housing (4) from a first material,
wherein the first material has a greater thermal conductivity than the second material.

2. A drive device according to Claim 1,
**characterised in that**
the stator housing (3) is a continuously-cast part, in particular with the drawing direction being parallel to the axial direction, in particular therefore parallel to the axial direction of the rotor shaft.

3. A drive device according to at least one of the preceding claims,
**characterised in that**
the gear unit has a first and a second housing part (1, 2) which are connected together,
wherein the stator housing (3) is connected, in particular screw-connected, to the second housing part (2),
wherein the housing (4), in particular tubular housing and/or pot-shaped housing, of the drive device is connected, in particular screw-connected, to the second housing part (2).

4. A drive device according to at least one of the preceding claims,
**characterised in that**
the stator housing (3) has on the surface facing the housing (4), in particular on its outer face, a coating to increase the heat output which is emitted.

5. A drive device according to at least one of the preceding claims,
**characterised in that**
the housing (4) has on the surface facing the stator housing (3), in particular on its inner face, a coating to increase the absorbed heat output.

6. A drive device according to at least one of the preceding claims,
**characterised in that**
the air stream is driven by convection, in particular only by convection.

7. A drive device according to at least one of the preceding claims,
**characterised in that**
at least one fan (11) or two fans (11) for driving the air stream is or are arranged on a bearing flange (31) of the motor.

8. A drive device according to at least one of the preceding claims,
**characterised in that**
a bearing of a rotor shaft of the motor is received in the bearing flange (31).

9. A drive device according to at least one of the preceding claims,
**characterised in that**
the fan (11) is arranged radially outside the partition portion (43), the fan (11) being spaced apart from the second angle-at-circumference direction in the peripheral direction,
in particular wherein the angle-at-circumference region covered by the fan (11) comprises the first angle at circumference.

10. A drive device according to at least one of the preceding claims,
**characterised in that**
the partition portion (43) is arranged on that axial side of the baseplate portion (42) which is remote from the gear unit.

11. A drive device according to at least one of the preceding claims,
**characterised in that**
a projection (44) for axially limiting the fan (11) is formed on the partition portion (43).

12. A drive device according to at least one of the preceding claims,
**characterised in that**
the baseplate portion (42) has at least one, in particular two, cutouts for cable feed-through (41).

13. A drive device according to at least one of the preceding claims,
**characterised in that**
the stator housing (3) has on the surface facing the housing (4), in particular on its outer face, a coating to increase the thermal radiation which is emitted.

14. A drive device according to at least one of the preceding claims,
**characterised in that**
the baseplate portion (42) a centrally arranged cutout (50) for receiving a stator (6) of an angular sensor.

## Revendications

1. Dispositif d'entraînement comprenant un moteur électrique et une transmission entraînée par ledit moteur électrique,
laquelle transmission comporte des première et seconde parties (1, 2) de carter,
ledit moteur électrique présentant un empilement de tôles statoriques qui est muni d'enroulements statoriques et est logé dans un boîtier statorique (3),
sachant que ledit boîtier statorique (3), ainsi que lesdites première et seconde parties (1, 2) de carter, sont entourés, notamment dans le sens radial, par une coque (4) dudit dispositif d'entraînement, en particulier une coque tubulaire et/ou une coque en forme de pot, ladite coque (4) étant espacée dudit boîtier statorique (3),
sachant qu'un courant d'air en circulation peut être engendré à l'intérieur de ladite coque (4),
la seconde partie (2) du carter étant pourvue, à sa surface, d'au moins un renfoncement en forme de poche en regard duquel s'opère un écoulement du courant d'air, ou d'au moins une partie dudit courant d'air,
de façon telle que de la crasse et/ou de la poussière puisse(nt) être déposée(s), par le courant d'air ou par une partie dudit courant d'air, dans ledit renfoncement en forme de poche de ladite seconde partie (2) du carter,
sachant qu'un élément de liaison, en particulier une vis, relie la première partie (1) du carter à la seconde partie (2) dudit carter et que la région spatiale, requise pour l'actionnement dudit élément de liaison à l'aide d'un outil, est formée au moyen dudit renfoncement et/ou est procurée par ce dernier,
sachant notamment que ledit outil vient en prise, au moins en partie, dans ledit élément de liaison ou autour de celui-ci, et peut être actionné à partir de l'espace environnant, de sorte que ledit renfoncement en forme de poche est de réalisation ouverte en direction de la zone d'espace intérieur circonscrite par ladite coque (4),
ledit boîtier statorique (3) étant doté d'évidements continus dans le sens axial, c'est-à-dire dans la direction de l'axe de l'arbre rotorique, lesdits évidements guidant le courant d'air d'un trait dans le sens axial et ledit courant d'air étant renvoyé, dans la direction opposée, dans la région distante entre ladite coque (4) et la partie formant ledit boîtier statorique, **caractérisé par le fait que**
le courant d'air, sortant des évidements du boîtier statorique (3), traverse les évidements respectifs de la seconde partie (2) du carter,
qui sont délimités, au moins partiellement, par des nervures (15) en saillie sur ladite seconde partie (2) du carter,
ledit boîtier statorique (3) étant relié à ladite coque (4) sur son côté tourné à l'opposé de la transmission, par l'intermédiaire d'une bride de montage (31),
laquelle bride de montage (31) comporte une région notamment circulaire, formant platine d'embase (42), et une région à cloison séparatrice (43) située sur la région précitée,
ladite région à cloison séparatrice (43) étant prévue pour séparer le courant d'air d'avec une région spatiale qui ceinture la région extrême axiale de l'arbre rotorique tournée à l'opposé de ladite transmission, ou qui ceinture, au moins en partie, un capteur angulaire implanté sur cette région extrême,
l'étendue radiale de ladite région à cloison séparatrice (43) étant moindre, dans une première direction angulaire circonférentielle, que dans une seconde direction angulaire circonférentielle différant de ladite première direction,
sachant que ledit boîtier statorique (3) et ladite coque (4) sont fabriqués, respectivement, en un second matériau et en un premier matériau,
lequel premier matériau présente une conductivité thermique supérieure à celle du second matériau.

2. Dispositif d'entraînement selon la revendication 1,
**caractérisé par le fait que**
le boîtier statorique (3) est une pièce venue d'extrusion, sachant notamment que la direction d'étirage est parallèle à la direction axiale et donc, en particulier, parallèle à la direction de l'axe de l'arbre rotorique.

3. Dispositif d'entraînement selon au moins l'une des revendications précédentes,
**caractérisé par le fait que**
la transmission comprend des première et seconde parties (1, 2) de carter, reliées l'une à l'autre,
le boîtier statorique (3) étant relié à la seconde partie (2) du carter, notamment relié par vissage,
la coque (4), en particulier la coque tubulaire et/ou la coque en forme de pot dudit dispositif d'entraînement, étant reliée à ladite seconde partie (2) du carter, notamment reliée par vissage.

4. Dispositif d'entraînement selon au moins l'une des revendications précédentes,
**caractérisé par le fait que**
le boîtier statorique (3) est muni d'un revêtement sur la surface pointant vers la coque (4), notamment sur sa surface extérieure, en vue d'accroître la puissance calorifique rayonnée.

5. Dispositif d'entraînement selon au moins l'une des revendications précédentes,
**caractérisé par le fait que**
la coque (4) est munie d'un revêtement sur la surface pointant vers le boîtier statorique (3), notamment sur sa surface intérieure, en vue d'accroître la puissance calorifique absorbée.

6. Dispositif d'entraînement selon au moins l'une des revendications précédentes,
**caractérisé par le fait que**
le courant d'air est brassé par convection, en particulier uniquement par convection.

7. Dispositif d'entraînement selon au moins l'une des revendications précédentes,
**caractérisé par le fait**
**qu'**au moins un ventilateur (11), ou deux ventilateurs (11), est (sont) installé(s) sur une bride de montage (31) du moteur en vue du brassage du courant d'air.

8. Dispositif d'entraînement selon au moins l'une des revendications précédentes,
**caractérisé par le fait**
**qu'**un palier d'un arbre rotorique du moteur est intégré dans la bride de montage (31).

9. Dispositif d'entraînement selon au moins l'une des revendications précédentes,
**caractérisé par le fait que**
le ventilateur (11) est implanté radialement à l'extérieur de la région à cloison séparatrice (43), ledit ventilateur (11) étant situé à distance de la seconde direction angulaire circonférentielle, dans le sens périphérique,
sachant notamment que la région angulaire circonférentielle couverte par ledit ventilateur (11) inclut le premier angle périphérique.

10. Dispositif d'entraînement selon au moins l'une des revendications précédentes,
**caractérisé par le fait que**
la région à cloison séparatrice (43) se trouve du côté axial de la région, formant platine d'embase (42), qui est tourné à l'opposé de la transmission.

11. Dispositif d'entraînement selon au moins l'une des revendications précédentes,
**caractérisé par le fait**
**qu'**un élément saillant ou nez (44) est façonné sur la région à cloison séparatrice (43), en vue de délimiter le ventilateur (11) dans le sens axial.

12. Dispositif d'entraînement selon au moins l'une des revendications précédentes,
**caractérisé par le fait que**
la région formant platine d'embase (42) est dotée d'au moins un, notamment de deux évidement(s), afin de ménager une traversée (41) de câbles.

13. Dispositif d'entraînement selon au moins l'une des revendications précédentes,
**caractérisé par le fait que**
le boîtier statorique (3) est muni d'un revêtement sur la surface pointant vers la coque (4), notamment sur sa surface extérieure, en vue d'accroître le rayonnement thermique diffusé.

14. Dispositif d'entraînement selon au moins l'une des revendications précédentes,
**caractérisé par le fait que**
la région formant platine d'embase (42) est dotée d'un évidement (50) occupant un emplacement central, en vue de recevoir un stator (6) d'un capteur angulaire.
